**Europäisches Patentamt**

**European Patent Office**

**Office européen des brevets**

(11) Veröffentlichungsnummer: **0 182 303**
A2

(12) # EUROPÄISCHE PATENTANMELDUNG

(21) Anmeldenummer: 85114503.7

(22) Anmeldetag: 14.11.85

(51) Int. Cl.⁴: **B 60 P 3/32**

(30) Priorität: 14.11.84 DE 3441629

(43) Veröffentlichungstag der Anmeldung: 28.05.86
Patentblatt 86/22

(84) Benannte Vertragsstaaten: **AT BE CH DE FR GB IT LI LU NL SE**

(71) Anmelder: **Höhn, Roland, Dr., Lipfersbergerstrasse 20, D-7118 Ingelfingen (DE)**

(72) Erfinder: **Höhn, Roland, Dr., Lipfersbergerstrasse 20, D-7118 Ingelfingen (DE)**

(74) Vertreter: **Popp, Eugen, Dr. et al, MEISSNER, BOLTE & PARTNER Postfach 86 06 24, D-8000 München 86 (DE)**

(54) **Kraftfahrzeug, insbesondere Reisemobil.**

(57) Kraftfahrzeug, insbesondere Reisemobil, mit Führerhaus (12) und Wohn- oder Arbeitszelle (14) und einem Durchgang (16) vom Führerhaus (12) zur Wohnzelle (14). Die Wohnzelle ist vorzugsweise durch einen pick-up-Aufsatz (10) gebildet, der auf der Ladefläche (15) und/oder dem Rahmen des Kraftfahrzeuges befestigbar ist und einen sich zumindest über einen Teil des Führerhausdaches (18) oberhalb desselben nach vorne erstreckenden Alkoven (20) oder dergl. Fortsatz (21) aufweist. Das Dach (18) des Führerhauses (12) weist in Fortsetzung des Durchgangs (16) vom Führerhaus (12) zur Wohnzelle (14) unterhalb bzw. im Bereich des Alkovens (20) oder dergl. Fortsatzes (21) eine Ausnehmung (22) auf, die sich mit einer entsprechenden Ausnehmung (24) im Boden des Alkovens (20) oder dergl. Fortsatzes (21) im wesentlichen deckt. Dadurch läßt sich im Bereich dieser Ausnehmungen (22, 24) Stehhöhe erreichen.

0182303

## MEISSNER, BOLTE & PARTNER

Patentanwälte · European Patent Attorneys
München · Bremen

Meissner, Bolte & Partner, Postfach 86 06 24, D-8000 München 86

**Dr. Eugen Popp** Dipl.-Ing., Dipl.-Wirtsch.-Ing.
**Wolf E. Sajda** Dipl.-Phys.
] **Dr. Ulrich Hrabal** Dipl.-Chem.
: **Hans Meissner** Dipl.-Ing. (bis 1980)
**Erich Bolte** Dipl.-Ing.

BÜRO MÜNCHEN/MUNICH OFFICE:
Widenmayerstraße 48
Postfach/P.O. Box 86 06 24
D-8000 München 86
Telefon: (089) 22 26 31
Telex: 5 213 222 epo d
Telekopierer: (089) 22 17 21

Anmelder

Dr. Roland Höhn
Lipfersbergerstr. 20

7118 Ingelfingen

| Ihr Zeichen<br>Your ref. | Ihr Schreiben vom<br>Your letter of | Unser Zeichen<br>Our ref. | Datum<br>Date |
|---|---|---|---|
| | | M/HOE-14- EP | 14. November 1985<br>Po/cw |

---

## Kraftfahrzeug, insbesondere Reisemobil

---

### Beschreibung

Die Erfindung betrifft ein Kraftfahrzeug, insbesondere Reisemobil, mit Führerhaus und Wohn- oder Arbeitszelle und einem
Durchgang vom Führerhaus zur Wohnzelle, wobei die Wohnzelle
vorzugsweise durch einen pick-up-Aufsatz gebildet ist, der
auf der Ladefläche und/oder dem Rahmen des Kraftfahrzeuges
befestigbar ist und einen sich zumindest über einen Teil des
Führerhaus-Daches oberhalb desselben nach vorne erstreckenden
Alkoven oder dergl. Fortsatz aufweist.

Derartige Kraftfahrzeuge sind allgemein bekannt, und zwar sowohl mit fest montierter Wohnzelle als auch mit sogenannten "pick-up-Aufsätzen". Bei diesen bekannten Konstruktionen ist von Nachteil, daß vom Führerhaus die Wohnzelle nur in gebückter Haltung erreichbar ist, da auf jeden Fall im Führerhaus keine Stehhöhe vorhanden ist.

Der vorliegenden Erfindung liegt daher die Aufgabe zugrunde, ein Kraftfahrzeug der eingangs genannten Art zu schaffen, bei dem die Wohn- oder Arbeitszelle vom Führerhaus bequem erreichbar ist, insbesondere bereits im Führerhaus Stehhöhe vorhanden ist.

Diese Aufgabe wird in denkbar einfacher Weise durch die kennzeichnenden Merkmale des Patentanspruches 1 gelöst. Durch die Ausnehmung im Dach des Führerhauses und eine entsprechende Ausnehmung im Boden des darüber angeordneten Alkovens oder dergl. Fortsatzes ist es möglich, sich bereits im Führerhaus voll aufzurichten und in aufrechter Haltung die Wohn- bzw. Arbeitszelle zu besteigen. Durch die flächenmäßig begrenzte Ausnehmung im Dach des Führerhauses wird die Gesamtkonstruktion nur unwesentlich geschwächt. Die ursprüngliche Festigkeit der Führerhauskonstruktion bleibt im wesentlichen voll erhalten.

Die erfindungsgemäße Konstruktion eignet sich insbesondere für ein Doppelkabinen-Führerhaus, bei dem der hintere Teil durch die erfindungsgemäße Konstruktion bereits integraler Bestandteil der Wohn- bzw. Arbeitszelle wird.

Von besonderem Interesse ist die Erfindung für Kraftfahrzeuge, die vielseitig verwendet werden sollen, nämlich zum einen als Transportfahrzeug mit Ladebritsche und zum anderen als Wohnmobil. Zu diesem Zweck wird auf die Ladebritsche ein "pick-up-Aufsatz" befestigt, der die eingangs genannte Grundkonstruktion aufweist. Vor dem Anbringen des "pick-up-Aufsatzes" werden der in der Rückwand des Führerhauses vorgesehene Durchgang sowie die sich daran anschließende Dachausnehmung geöffnet, d. h. entsprechende Abdeckungen entfernt und mit entsprechenden Ausnehmungen bzw. Öffnungen im "pick-up-Aufsatz" zur Deckung gebracht. Auf diese Weise wird das Führerhaus integraler Bestandteil der Wohn- bzw. Arbeitszelle, wobei das Besteigen der Wohn- bzw. Arbeitszelle äußerst bequem ist. Soll das Fahrzeug wieder als Transportfahrzeug verwendet werden, wird der "pick-up-Aufsatz" entfernt. Die Dachausnehmung sowie der Durchgang in der hinteren Führerhauswand werden durch entsprechende Deckel oder Schiebeelemente wie Schieberollos verschlossen. Vorzugsweise ist die Dachausnehmung durch ein schiebedachartiges Element verschließ- bzw. öffenbar. Man hat auf diese Weise gleichzeitig ein Transportfahrzeug mit Schiebedach.

Die Abdeckung des Durchgangs in der hinteren Führerhauswand sowie der sich daran anschließenden Dachausnehmung kann auch durch eine Art "Hardtop" verschlossen werden, das vorzugsweise aus transparentem Kunststoff besteht.

Die Abdichtung zwischen Führerhaus und "pick-up-Aufsatz" erfolgt vorzugsweise durch ein dazwischen angeordnetes Dichtungsprofil, z. B. Kastenprofil, aus Gummi oder dergl.

Bei Verwendung eines "pick-up-Aufsatzes" mit Hubdach erstreckt sich dieses vorzugsweise noch über die Dachausnehmung. Durch Anheben des Hubdaches kann dann die oben beschriebene Stehhöhe bereits im Führerhaus erhalten werden. Bei abgesenktem Hubdach steht dieses nur unwesentlich über das eigentliche Führerhausdach hinweg mit der Folge, daß sich das Fahrzeug wie ein herkömmlicher Kleinbus fahren läßt bzw. verhält. Bei dieser Konstruktion ist es auch denkbar, den der Wohnzelle zugeordneten Hubdachteil separat von dem der Dachausnehmung zugeordneten Hubdachteil auszubilden, so daß beide Hubdächer unabhängig voneinander bedient und benutzt werden können. Auf diese Weise ist es möglich, nur im Führerhausbereich Stehhöhe zu schaffen, z. B. bei einer kurzen Pause am Straßenrand oder auf einem Parkplatz. Für einen längeren Aufenthalt wird dann das gesamte Hubdach, nämlich auch das der Wohnzelle zugeordnete Hubdach angehoben.

Bei einem Aufsatz mit Alkoven, ist die Dachausnehmung und/oder Ausnehmung im Boden des Alkovens vorzugsweise durch einen Deckel verschließbar. Bei einteiliger Ausführung des Deckels ist dieser an einem Rand der Ausnehmung, vorzugsweise am Rand der Ausnehmung im Boden des Alkovens, angelenkt. Bei zweiteiliger Ausführung sind die Deckelhälften an den beiden gegenüberliegenden Seitenrändern der Dachausnehmung oder Ausnehmung im Boden des Alkovens angelenkt. Die Anlenkung des Deckels bzw. der Deckelhälften erfolgt jeweils so, daß er bzw. sie bei geöffneter Ausnehmung sich etwa vertikal nach oben erstrecken und einen dahinterliegenden Stauraum begrenzen. In diesen Stauraum kann insbesondere Bettzeug verstaut werden. Bei geschlossener Dachausnehmung kann im Alkoven eine sich quer über das Führerhausdach erstreckende Schlafstätte hergerichtet werden.

Von ganz besonderer Bedeutung ist die "Tiefenkonstruktion" nach den Ansprüchen 5 bis 10 in Kombination mit

- 5 -

der oben beschriebenen "Höhenkonstruktion". Es wird auf diese Weise sowohl im Führerhaus als auch in einem großen Teil der Wohn- bzw. Arbeitszelle volle Stehhöhe erreicht, bei insgesamt relativ niedriger Bauhöhe des Kraftfahrzeuges. Im Bereich der Wohnzelle wird der Boden etwa auf die Höhe des Führerhausbodens abgesenkt. Gleichzeitig wird die lichte Höhe im Bereich der Dachausnehmung durch die lichte Höhe der Wohnzelle bzw. des die Wohnzelle begrenzenden Aufsatzes bestimmt.

Selbstverständlich ist die wannenförmige Vertiefung nicht zwingend notwendig. Grundsätzlich wird die gestellte Aufgabe auch bei einem Fahrzeug gelöst, bei dem der Durchgang vom Führerhaus zur Wohnzelle sich ausgehend vom Dach nur etwa bis zur Höhe einer höher gelegenen Ladefläche erstreckt. Gerade bei dieser Ausführungsform ist die oben beschriebene Dachausnehmung von besonderem Vorteil, da sie ein unbequemes "Hineinkriechen" in die Wohnzelle vermeiden hilft. Unter "höher gelegener Ladefläche" soll eine Ladefläche verstanden werden, die höher als der Boden des Führerhauses liegt. Das gleiche gilt für einen "pick-up-Aufsatz", der unmittelbar auf den Rahmen des Fahrzeuges aufgesetzt ist und einen gegenüber dem Boden des Führerhauses höher gelegenen Boden aufweist. Die wannenartige Vertiefung bringt jedoch gegenüber diesen Lösungen zusätzlichen Freiraum bzw. Bewegungsraum mit im wesentlichen voller Stehhöhe. In diesem Bereich kann ein Duschplatz angeordnet sein oder eine Kochstelle bequem bedient werden.

Nachstehend werden bevorzugte Ausführungsbeispiele eines erfindungsgemäß ausgebildeten Kraftfahrzeuges anhand der beigefügten Zeichnung näher beschrieben.
Es zeigen:

Fig. 1        ein erfindungsgemäß ausgebildetes Kraftfahrzeug mit "Tiefen- und Höhenkonstruktion" in perspektivischer Darstellung, teils mit weggebrochenen Wänden;

Fig. 2        das Fahrzeug nach Fig. 1 in Seitenansicht,

Fig. 3        das Fahrzeug entsprechend den Fig. 1 und 2 mit einem Hubdach-Aufsatz in Seitenansicht,

Fig. 4        ein Fahrzeug mit einem Aufsatz entsprechend den Fig. 1 und 2 mit einem normalen Führerhaus mit nur einer Sitzreihe in Seitenansicht; und

Fig. 5        einen Teil des Fahrzeuges nach den Fig. 1 bis 4 ohne "pick-up-Aufsatz" in perspektivischer Rückansicht.

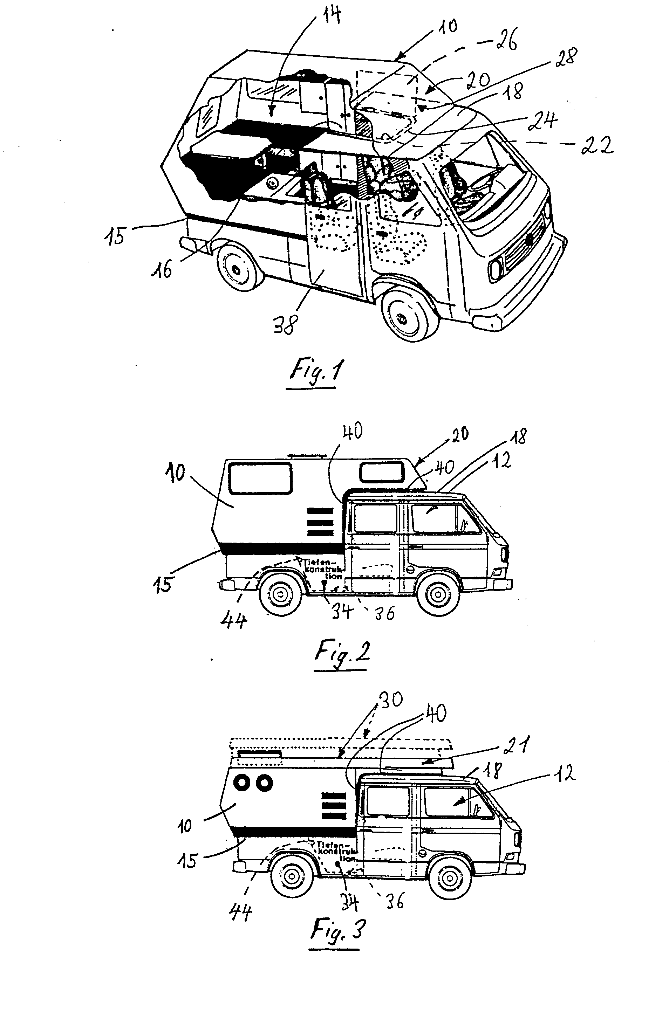

In den Fig. 1 und 2 ist ein motorangetriebenes Transportfahrzeug bzw. Britschenwagen mit einem Führerhaus 12 und einer Ladefläche 15 schematisch dargestellt, auf der ein eine Wohnzelle 14 bildender "pick-up-Aufsatz" 10 mittels nicht dargestellter Schnallenverschlüsse oder dergl. befestigt ist. Der "pick-up-Aufsatz" 10 ist etwa quaderförmig ausgebildet und mit einem sich über das Dach 18 des Führerhauses 12 nach vorne erstreckenden Alkoven 20 versehen. Der Boden des "pick-up-Aufsatzes" 10 liegt auf der Ladefläche 15 des Transportfahrzeuges auf.
Vorzugsweise sind zwischen der Unterseite des Aufsatzes 10 und der Ladefläche Schwingungs-Dämpfungselemente angeordnet, die die Wohnzelle bzw. den Aufsatz 10 während der Fahrt relativ schwingungsfrei
halten. Vor der Befestigung des Aufsatzes 10 werden
die seitlichen Bordwände und hintere Bordwand der
Ladefläche entfernt. Die Befestigung des Aufsatzes 10
kann dann auch an den Gelenkscharnieren der Ladebordwände erfolgen.

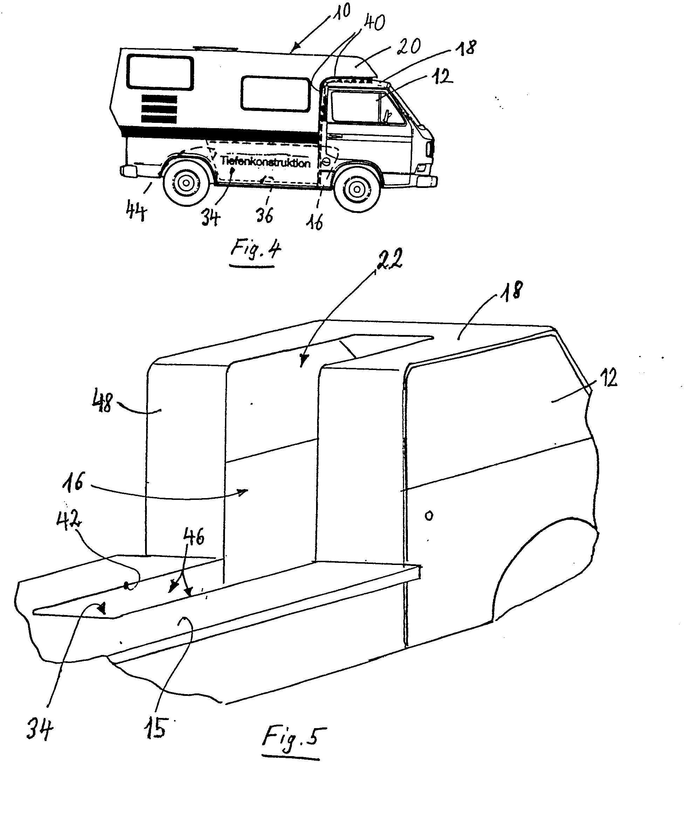

Wie Fig. 1 und auch Fig. 5 erkennen lassen, weist
das Dach 18 des Führerhauses 12 in Fortsetzung eines
Durchgangs 16 vom Führerhaus 12 zur Wohnzelle 14
unterhalb bzw. im Bereich des Alkovens 20 eine Ausnehmung 22 auf, die sich mit einer entsprechenden Ausnehmung 24 im Boden des Alkovens 20 etwa deckt, so daß
im Bereich dieser Ausnehmungen 22, 24 Stehhöhe erhalten wird. An dem einen Seitenrand der Ausnehmung 24
im Boden des Alkovens 20 ist ein Deckel 26 angelenkt
derart, daß er bei geöffneter Ausnehmung sich etwa
vertikal nach oben erstreckt und einen dahinterliegenden Stauraum 28 begrenzt. Soll der Alkoven 20
als Liegeplatz dienen, wird der Deckel 26 in die Ebene
des Alkovenbodens abgeklappt und darüber die Liegestätte hergerichtet. Die Ausnehmungen 22, 24 sowie
der in der Fahrerhausrückwand angeordnete Durchgang 16
zur Wohnzelle 14 sind etwa fahrzeugmittig angeordnet
und weisen eine Breite von etwa 1/3 bis 1/2 der
Führerhausbreite auf. Dadurch ist ein bequemer Einstieg in die Wohnzelle 14 vom Führerhaus 12 möglich.
Man kann von den Sitzen im Führerhaus zur Mitte desselben hin bequem aufstehen, ohne sich am Dach des
Führerhauses 16 den Kopf zu stoßen und gar zu verletzen.
In aufrechter Haltung kann die Wohnzelle 14 betreten
werden.

Bei dem dargestellten Ausführungsbeispiel schließt sich an den Durchgang 16 vom Führerhaus 12 in die Wohnzelle 14 in den Bereich derselben hinein eine etwa wannenartige Vertiefung 34 an, deren Boden 36 etwa auf Höhe des Bodens des Führerhauses 12 liegt. Durch diese "Tiefenkonstruktion" im Bereich der Wohnzelle 14 wird auch dort volle Stehhöhe erzielt. Insgesamt erhält man durch die dargestellte "Tiefenkonstruktion" sowie "Höhenkonstruktion" (Dachausnehmung) eine Integration von Wohnzelle 14 mit Führerhaus 12.

Durch die Dachausnehmung 22 und die entsprechende Ausnehmung im Boden des Alkoven 20 läßt sich die Wohnzelle auch sehr bequem, d. h. in aufrechter Haltung von außen her durch die hintere Seitentür 38 betreten.

Um ein Stolpern beim Betreten der Wohnzelle zu verhindern, erstreckt sich der Durchgang 16 vorzugsweise bis zum Boden des Führerhauses 12 bzw. der wannenartigen Vertiefung 34. Die Breite der wannenartigen Vertiefung ist abhängig von der darunter angeordneten Rahmenkonstruktion. Die Länge der Vertiefung 34 ist ebenfalls fahrzeugabhängig und in der Regel durch die Lage der Hinterachse oder einen Heckmotor (Volkswagen-Britschenwagen) bestimmt.

Im Bereich des Durchganges 16 und der Ausnehmungen 22, 24 erfolgt die Abdichtung zwischen Führerhaus 12 und Aufsatz 10 durch ein umlaufendes Dichtungsprofil 40 aus Gummi oder dergl.

An der den Durchgang 16 begrenzenden Öffnung in der Rückwand des Führerhauses 12 oder entsprechenden Öffnung in der der Rückwand des Führerhauses 12 zugekehrten Vorderwand des Aufsatzes 10 kann noch eine Tür angeordnet sein, um die Wohnzelle vom Führerhaus trennen zu können. Bei den dargestellten Ausführungsbeispielen fehlt eine derartige Tür.

Die wannenartige Vertiefung 34 wird bei dem dargestellten Ausführungsbeispiel dadurch erhalten, daß in die gegenüber den Boden des Führerhauses 12 erhöht angeordnete Ladefläche 15 eine entsprechende Ausnehmung 42 ausgeschnitten wird. Eine entsprechende Ausnehmung wird im Boden des Aufsatzes 10 vorgesehen. Diese beiden Ausnehmungen decken sich im wesentlichen im montierten Zustand. Bei dem hier verwendeten Transportfahrzeug befindet sich unmittelbar hinter dem Führerhaus 12 unterhalb der Ladefläche 15 ein Laderaum, der zur Ausbildung der wannenartigen Vertiefung 34 ausgenutzt wird. Der Boden dieses Laderaums ist gleichzeitig der Boden der wannenartigen Vertiefung 34. Im übrigen wird die wannenartige Vertiefung 34 seitlich durch eine der Führerhauswand gegenüberliegend angeordnete Begrenzungswand 44 und zwei sich in Fahrzeuglängsrichtung erstreckende Seitenwände 46 begrenzt, die sich jeweils an den Rand der Ausnehmung 42 nach unten in den Laderaum hinein bis zum Boden desselben erstrecken. Die hintere Führerhauswand ist in Fig. 5 mit der Bezugsziffer 48 gekennzeichnet.

Die wannenartige Vertiefung kann einstückig am Aufsatz 10 angeformt sein. Sie kann auch lösbar am Boden des Aufsatzes 10 befestigt sein. Genausogut ist es denkbar, die wannenartige Vertiefung separat vom Aufsatz 10 am Rahmen des Transportfahrzeuges zu montieren. Dies gilt insbesondere dann, wenn ein Transportfahrzeug mit gegenüber dem Boden des Führerhauses erhöht angeordneter Ladefläche bereitgestellt wird und unterhalb der Ladefläche genügend Raum für die Ausbildung der wannenartigen Vertiefung vorhanden ist.

Die Ausführungsform nach Fig. 4 entspricht weitgehend derjenigen nach den Fig. 1 und 2 nur mit dem Unterschied, daß bei ersterer das Führerhaus eine Doppelkabine ist, während bei letzterer das Führerhaus nur eine Sitzreihe quer zur Fahrtrichtung aufweist. Die prinzipielle Konstruktion beider Ausführungen ist jedoch gleich.

Die Ausführungsform nach Fig. 3 unterscheidet sich von den vorangehenden Ausführungsformen dadurch, daß der Aufsatz 10 ein Hubdach 30 aufweist, das sich als Fortsatz 21 nach vorne über das Dach 18 des Führerhauses 12 erstreckt. Im abgesenkten Zustand des Hubdaches 30 ist die Gesamthöhe des Fahrzeuges nur unwesentlich größer als die Bauhöhe des Fahrzeuges ohne Aufsatz 10. Das Fahrzeug entspricht von der äußeren Gestalt einem herkömmlichen Kleinbus mit Hubdach. Es läßt sich problemlos in Garagen normaler lichter Höhe fahren. Der Aufsatz 10 läßt sich bei dieser Ausführungsform besonders gut als ständige Einrichtung verwenden. Das Fahrzeug ist bei abgesenktem Hubdach handlich, leicht und lebendig zu fahren.

Bei angehobenem Hubdach 30 (gepunktete Linien in Fig. 3) wird aufgrund der oben beschriebenen "Tiefen- und Höhenkonstruktion" sowohl im Führerhaus 12 als auch in dem sich daran anschließenden Aufsatz 10 volle Stehhöhe erhalten, und zwar im Bereich der wannenartigen Vertiefung 34 und in Fig. 3 nicht näher dargestellten Dachausnehmung 22.

- 11 -

Das Hubdach 30 kann so gestaltet sein, daß es im Bereich der Dachausnehmung 22 separat benutzbar ist. In diesem Fall kann dieses Hubdach beständiger Teil des Fahrzeuges sein, d. h. auch bei abmontiertem Aufsatz 10.

Der umlaufende Rand von Durchgang 16 und Dachausnehmung 22 ist vorzugsweise mit einer umlaufenden Randleiste verkleidet, gegebenenfalls zusätzlich gepolstert. Die Länge der Dachausnehmung 22 in Fahrzeuglängsrichtung beträgt etwa 1/3 bis 3/4, etwa 1/2 der Länge des Führerhauses 12.

Im Boden der Vertiefung 34 kann noch eine Duschwanne angeordnet sein, die sich noch etwa tiefer nach unten erstreckt und bei Nichtgebrauch durch einen Deckel verschlossen ist. Diesbezüglich wird also zusätzlich in die Tiefe des Fahrzeuges gebaut.

Sämtliche in den Unterlagen offenbarten Merkmale werden als erfindungswesentlich beansprucht, soweit sie einzeln oder in Kombination gegenüber dem Stand der Technik neu sind.

# MEISSNER, BOLTE & PARTNER

Patentanwälte · European Patent Attorneys
München · Bremen

Meissner, Bolte & Partner, Postfach 86 06 24, D-8000 München 86

**Anmelder:**

Dr. Roland Höhn
Lipfersbergerstr. 20

7118 Ingelfingen

Dr. Eugen Popp Dipl.-Ing., Dipl.-Wirtsch.-Ing.
Wolf E. Sajda Dipl.-Phys.
Dr. Ulrich Hrabal Dipl.-Chem.
Hans Meissner Dipl.-Ing. (bis 1980)
Erich Bolte Dipl.-Ing.

BÜRO MÜNCHEN/MUNICH OFFICE:
Widenmayerstraße 48
Postfach/P.O. Box 86 06 24
D-8000 München 86
Telefon: (0 89) 22 26 31
Telex: 5 213 222 epo d
Telekopierer: (0 89) 22 17 21

| Ihr Zeichen Your ref. | Ihr Schreiben vom Your letter of | Unser Zeichen Our ref. | Datum Date |
|---|---|---|---|
| | | M/HOE-14-EP | 14. November 1985 Po/cw |

Kraftfahrzeug, insbesondere Reisemobil

Patentansprüche

1. Kraftfahrzeug, insbesondere Reisemobil, mit Führerhaus (12) und Wohn- oder Arbeitszelle (14) und einem Durchgang (16) vom Führerhaus (12) zur Wohnzelle (14), wobei die Wohnzelle vorzugsweise durch einen pick-up-Aufsatz (10) gebildet ist, der auf der Ladefläche (15) und/oder dem Rahmen des Kraftfahrzeuges befestigbar ist und einen sich zumindest über einen Teil des Führerhaus-Daches (18) oberhalb desselben nach vorne erstreckenden Alkoven (20) oder dergl.

Fortsatz (21) aufweist,

dadurch gekennzeichnet, daß das Dach (18) des Führerhauses (12) in Fortsetzung des Durchgangs (16) vom Führerhaus (12) zur Wohnzelle (14) unterhalb bzw. im Bereich des Alkovens (20) oder dergl. Fortsatzes (21) eine Ausnehmung (22) aufweist, die sich mit einer entsprechenden Ausnehmung (24) im Boden des Alkovens (20) oder dergl. Fortsatzes (21) im wesentlichen deckt, so daß im Bereich dieser Ausnehmungen (22, 24) eine größere lichte Höhe (Stehhöhe) erzielbar ist.

2. Kraftfahrzeug nach Anspruch 1, dadurch gekennzeichnet, daß die Dachausnehmung (22) und/oder Ausnehmung (24) im Boden des Alkovens (20) oder dergl. Fortsatzes (21) durch einen Deckel (26), Schiebeelement, -rollo oder dergl., verschließbar ist.

3. Kraftfahrzeug nach Anspruch 2, dadurch gekennzeichnet, daß der Deckel (26) bei einteiliger Ausführung an einem Rand der Ausnehmung (22 bzw. 24) angelenkt ist, bei zweiteiliger Ausführung die Deckelhälften an den beiden gegenüberliegenden Seitenrändern der Ausnehmung (22 bzw. 24) angelenkt sind, und zwar jeweils derart, daß der Deckel (26) bzw. die Deckelhälften bei geöffneter Ausnehmung sich etwa vertikal nach oben erstrecken und einen dahinterliegenden Stauraum (28) begrenzen.

4. Kraftfahrzeug nach einem der Ansprüche 1 bis 3, dadurch gekennzeichnet, daß der sich über das Dach (18) des Führerhauses (12) nach vorne erstreckende Fortsatz (21) als Hubdach oder Teil eines solchen, insbesondere Teil eines dem Aufsatz (10) zugeordneten Hubdaches (30), ausgebildet ist.

5. Kraftfahrzeug nach einem der Ansprüche 1 bis 4, dadurch g e k e n n z e i c h n e t , daß sich an den Durchgang (16) vom Führerhaus (12) zur Wohnzelle (14) in den Bereich derselben hinein eine etwa wannenartige Vertiefung (34) anschließt, deren Boden (36) etwa auf Höhe des Bodens des Führerhauses (12) liegt.

6. Kraftfahrzeug nach Anspruch 5, dadurch g e k e n n z e i c h n e t , daß der Durchgang (16) sich bis zum Boden des Führerhauses (12) bzw. der wannenartigen Vertiefung (34) erstreckt.

7. Kraftfahrzeug nach einem der Ansprüche 1 bis 6, dadurch g e k e n n z e i c h n e t , daß der Durchgang (16) und die in Fortsetzung daran anschließende Dachausnehmung (22) etwa fahrzeugmittig angeordnet sind und eine Breite von etwa 1/3 bis 1/2 der Führerhausbreite aufweisen.

8. Kraftfahrzeug nach einem der Ansprüche 1 bis 7, dadurch g e k e n n z e i c h n e t , daß der Durchgang (16) und gegebenenfalls die wannenartige Vertiefung (34) durch einen Deckel, ein Schiebeelement, oder dergl. verschließbar sind.

9. Kraftfahrzeug nach einem der Ansprüche 5 bis 8, mit einem unter der Ladefläche (15) unmittelbar hinter dem Führerhaus (12) angeordneten geschlossenen Laderaum, dadurch g e k e n n z e i c h n e t , daß die wannenartige Vertiefung (34) sich in den Laderaum hineinerstreckt, wobei der Boden des Laderaums vorzugsweise zugleich der Boden der Vertiefung (34) ist.

- 4 -

10. Kraftfahrzeug nach Anspruch 9, dadurch  g e - k e n n z e i c h n e t ,  daß die seitliche Begrenzung der Vertiefung (34) durch eine der Führerhauswand (48) gegenüberliegend angeordnete Begrenzungswand (44) des Laderaums und zwei sich in Fahrzeuglängsrichtung erstreckende Seitenwände (46), die den Innenraum des Aufsatzes bzw. der Wohnzelle (14) vom übrigen Landeraum trennen, sowie gegebenenfalls durch die hintere Führerhauswand (48) oder einen Teil derselben gebildet ist.

11. Kraftfahrzeug nach einem der Ansprüche 5 bis 8, dadurch  g e k e n n z e i c h n e t ,  daß die Vertiefung (34) durch eine am Aufsatz (10) einstückig angeformte oder lösbar befestigte Wanne gebildet ist.

12. Kraftfahrzeug nach einem der Ansprüche 1 bis 11, dadurch  g e k e n n z e i c h n e t ,  daß zwischen der hinteren Führerhauswand (48) sowie dem Dach (18) des Führerhauses (12) einerseits und der angrenzenden Vorderwand des Aufsatzes (10) sowie dem dem Dach (18) des Führerhauses (12) zugewandten Boden des Alkovens (20) oder dergl. Fortsatzes (21) andererseits zumindest um die durch den Durchgang (16) und die Dachausnehmung (22) herum eine luft- und wasserdichte sowie elastische Dichtleiste (Dichtungsprofil 40) angeordnet ist.

13. Kraftfahrzeug nach einem der Ansprüche 1 bis 12, dadurch  g e k e n n z e i c h n e t ,  daß der Aufsatz (10) am Fahrzeug fest angeordnet oder durch Schnallenverschlüsse oder dergl. auf der Ladefläche (15) oder dem Rahmen des Fahrzeugs lösbar befestigt ist.

*Fig.1*

*Fig.2*

*Fig.3*

Tiefenkonstruktion

Fig. 4

Fig. 5